# EUROPÄISCHE PATENTANMELDUNG

(11) **EP 4 467 285 A1**
(43) Veröffentlichungstag der Anmeldung: **27.11.2024**
(21) Anmeldenummer: 24165899.6
(22) Anmeldetag: 25.03.2024
(51) Int. Cl.: B24B 27/00, B24B 47/20, B23Q 17/24, B24B 5/02, B24B 5/35, B24B 41/00, B24B 49/12, B24B 5/04

(54) **SCHLEIFMASCHINE UND VERFAHREN ZUM BETRIEB EINER SCHLEIFMASCHINE**

(30) Priorität: 23.05.2023 DE 102023113408
(71) Anmelder: Adelbert Haas GmbH, 78647 Trossingen (DE)
(72) Erfinder: Schnee, Gerhard, 78588 Denkingen (DE); Wember, Dirk, 78628 Rottweil (DE)
(74) Vertreter: Westphal, Mussgnug & Partner Patentanwälte mbB

(57) **Zusammenfassung**

Die Erfindung betrifft eine Schleifmaschine (1) mit einem Maschinenbett (10), auf dem eine Werkstückspindel (20) mit einer Werkstückaufnahme (21) und eine Werkzeugspindel (40) mit einer Werkzeugaufnahme (41) so angeordnet sind, dass ein in die Werkstückspindel (20) aufgenommenes Werkstück (100) relativ zu einem in der Werkzeugaufnahme (40) aufgenommenen Werkzeug (45) entlang mehrerer Achsen verfahr- bzw. verdrehbar ist, wobei wobei auf dem Maschinenbett (10) eine Kabine (30) angeordnet ist, die einen Arbeitsraum (31) definiert, in dem insbesondere die Werkzeugspindel (40) und die Werkstückspindel (20) zur Bearbeitung von Werkstücken (100) angeordnet sind,
wobei die Schleifmaschine (1) einen Roboter (60) für den Werkstückwechsel aufweist, welcher außerhalb des Arbeitsraums (31) in einer Automatisierungskabine (61) angeordnet ist, wobei die Werkstückspindel (20) auf der X-Achse für einen Werkstückwechsel an die Automatisierungskabine (61) heran oder in die Automatisierungskabine (61) hinein gefahren werden kann, so dass der Roboter(60) beim Werkstückwechsel nicht in den Arbeitsraum (31) eingreift,
**dadurch gekennzeichnet**, dass die Schleifmaschine (1) eine die X-Achse umgreifende Lichtschranke (90) mit einem Sender (91) und wenigstens einem Empfänger (92) zur Bestimmung der Ausspannlänge des Werkstücks (100) in der Werkstückspindel (20) beim Zurückfahren der Werkstückspindel (20) von der Automatisierungskabine (61) nach dem Werkstückwechsel aufweist sowie ein Verfahren zum Betrieb einer solchen Schleifmaschine (1).

## Beschreibung

Die Erfindung betrifft eine Schleifmaschine mit den Merkmalen des Oberbegriffs des Anspruchs 1 und ein Verfahren zum Betrieb einer solchen Schleifmaschine.

Schleifmaschinen, wie sie beispielsweise aus der EP 2 915 622 B1 bekannt sind, ermöglichen eine Bearbeitung von Werkstücken, die sich dadurch auszeichnet, dass sich mit ihr komplexe Oberflächengeometrien mit hoher Präzision herstellen lassen. Gerade weil diese hochpräzise Fertigung ohnehin in vielen Fällen eine nicht unerhebliche Bearbeitungszeit in Anspruch nimmt, ist es von besonderer Bedeutung, einen möglichst hohen Durchsatz von Werkstücken zu erreichen, um kostengünstig und profitabel fertigen zu können.

Die DE 10 2022 112 353 offenbart eine Schleifmaschine, bei welcher auf dem Maschinenbett eine Kabine angeordnet ist, die einen Arbeitsraum definiert, in dem insbesondere die Werkzeugspindel und die Werkstückspindel zur Bearbeitung von Werkstücken angeordnet sind, wobei die Schleifmaschine einen Roboter für den Werkstückwechsel aufweist, welcher außerhalb des Arbeitsraum in einer Automatisierungskabine angeordnet ist, wobei die Werkstückspindel auf der X-Achse für einen Werkstückwechsel an die Automatisierungskabine heran oder in die Automatisierungskabine hineingefahren werden kann, so dass der Roboterarm beim Werkstückwechsel nicht in den Arbeitsraum eingreift. Nach einem Werkstückwechsel muss vor jeder Bearbeitung des Werkstücks die Ausspannlänge des entsprechenden Werkstücks bestimmt werden, um eine hohe Genauigkeit der Bearbeitung gewährleisten zu können. Es ist bekannt, dazu das eingespannte Werkstück, sobald die Werkstückspindel nach dem Werkstückwechsel zurück an eine Bearbeitungsposition gefahren ist, mit einem mechanischen Taster abzutasten, um die Ausspannlänge zu ermitteln. Unter der Ausspannlänge kann dabei insbesondere die Länge des Werkstücks, die über die Werkstückaufnahme hervorsteht, oder der Abstand zwischen der Auflagefläche der Werkstückspindel und dem freien Ende des in der Werkstückspindel aufgenommenen Werkstücks angesehen werden.

Die Aufgabe der Erfindung besteht darin, eine Schleifmaschine und ein Verfahren zum Betrieb einer Schleifmaschine derart weiterzuentwickeln, dass der mit der Schleifmaschine erreichbare Durchsatz erhöht wird.

Diese Aufgabe wird gelöst durch eine Schleifmaschine mit den Merkmalen des Patentanspruchs 1 und ein Verfahren zum Betrieb einer Schleifmaschine mit den Merkmalen des Patentanspruchs 10.

Vorteilhafte Ausgestaltungen und Weiterbildungen der Erfindung sind Gegenstand der jeweiligen abhängigen Ansprüche.

Die erfindungsgemäße Schleifmaschine weist ein Maschinenbett auf, auf dem eine Werkstückspindel mit einer Werkstückaufnahme und eine Werkzeugspindel mit einer Werkzeugaufnahme so angeordnet sind, dass ein in die Werkstückspindel aufgenommenes Werkstück relativ zu einem in der Werkzeugaufnahme aufgenommenen Werkzeug, vorzugweise einem Schleifwerkzeug, das insbesondere durch ein Schleifscheibenpaket gebildet sein kann,
- entlang einer X-Achse, die eine in eine erste Richtung parallel zur Oberfläche des Maschinenbetts verlaufende Achse ist, verfahrbar ist,
- entlang einer Y-Achse, die eine in eine zweite Richtung parallel zur Oberfläche des Maschinenbetts verlaufende Achse ist, verfahrbar ist,
- entlang einer Z-Achse, die eine senkrecht zur Oberfläche des Maschinenbetts verlaufende Achse ist, verfahrbar ist,
- um eine A-Achse, die eine parallel zur Oberfläche des Maschinenbetts verlaufende Achse ist, herum drehbar ist, und
- um eine C-Achse, die eine senkrecht zur Oberfläche des Maschinenbetts verlaufende Achse ist, herum drehbar ist.

Die Schleifmaschinen umfasst weiterhin eine auf dem Maschinenbett angeordnete Kabine, welche einen Arbeitsraum definiert, in dem insbesondere die Werkzeugspindel und die Werkstückspindel zur Bearbeitung von Werkstücken angeordnet sind.

Schließlich weist die Schleifmaschine einen Roboter, der insbesondere als Roboterarm ausgeführt sein kann, für den Werkstückwechsel auf, welcher außerhalb des Arbeitsraums in einer Automatisierungskabine, die allerdings insbesondere in Richtung auf den Arbeitsraum hin zumindest zeitweise, insbesondere für den Werkstückwechsel, geöffnet sein kann, angeordnet ist, wobei die Werkstückspindel auf der X-Achse an die Automatisierungskabine heran oder in die Automatisierungskabine hinein gefahren werden kann, so dass der Roboter beim Werkstückwechsel nicht in den Arbeitsraum eingreifen muss.

Erfindungswesentlich ist, dass eine Lichtschranke mit einem Sender und wenigstens einem Empfänger zur Bestimmung der Ausspannlänge des Werkstücks in der Werkstückspindel beim Zurückfahren der Werkstückspindel von der Automatisierungskabine nach dem Werkstückwechsel vorgesehen ist. Die Lichtschranke, insbesondere der Lichtstrahl der Lichtschranke, quert insbesondere die X-Achse und ist besonders bevorzugt senkrecht zu ihr angeordnet. Zunächst ermöglicht ein derartiges optisches Messverfahren ein berührungsloses Ausmessen des Werkstücks. Weiterhin ermöglicht diese Lichtschranke auf einfache Art und Weise eine Ermittlung der Ausspannlänge direkt durch Verfahren der Werkstückspindel auf dem Zustellweg von der Position der Werkstückspindel, in welcher der Werkstückwechsel erfolgt, zur Bearbeitungsposition im Arbeitsraum. Zusätzlicher Zeitaufwand zur Bestimmung der Ausspannlänge, wenn die Werkstückspindel an die Bearbeitungsposition im Arbeitsraum gefahren ist, entfällt somit vollständig, da die Bestimmung der Ausspannlänge während der ohnehin erforderlichen Zeit zur Bewegung der Werkstückspindel von der Wechselposition zur Bearbeitungsposition erfolgt. Auf diese Weise kann der mit der Schleifmaschine erreichbare Durchsatz signifikant erhöht werden.

Vorzugsweise ist der Sender als Laser ausgebildet, wodurch eine hohe Genauigkeit in der Bestimmung der Position, in welcher die Lichtschranke freigegeben wird, erfolgen kann.

Eine besonders vorteilhafte Ausführungsform der Erfindung sieht vor, dass der Sender und der Empfänger an einer Messbrücke angeordnet sind, welche die X-Achse umgreift. Durch Verwendung einer derartigen Messbrücke sind der Sender und der Empfänger bereits relativ zueinander ausgerichtet und justiert, was die Montage vereinfachen kann. Der Sender und der Empfänger können an der Messbrücke verschiebbar angeordnet sein, um sie bei Bedarf relativ zueinander ausrichten oder fein justieren zu können.

Vorzugsweise ist die Messbrücke in Richtung senkrecht zur X-Achse verschiebbar angeordnet. Dies ermöglicht eine einfache Anpassung, falls Werkstücke unterschiedlicher Geometrie in der Schleifmaschine bearbeitet werden sollen.

Vorteilhafterweise umfasst die Schleifmaschine Mittel zur elektrooptischen Entfernungsmessung und/oder geometrischen Vermessung. Die Mittel können insbesondere Laser-basiert ausgebildet sein und beispielsweise auf einer Laufzeitmessung, einer Phasenlagemessung oder dem Prinzip der Lasertriangulation beruhen. Die Mittel sind insbesondere derart angeordnet, dass die Messung oder Vermessung an der Wechselposition oder auf dem Zustellweg von der Wechselposition zur Bearbeitungsposition, erfolgen kann. Derartige Mittel ermöglichen die Ermittlung weiterer geometrischer Merkmale des Werkstücks, beispielsweise die Messung des Durchmessers oder der Breite des Werkstücks, aber auch die Vermessung der Konizität oder die Balligkeit oder sonstiger geometrischer Merkmale des Werkstücks oder auch der Werkstückspindel relativ zum Werkstück, insbesondere auf dem Zustellweg von der Wechselposition zur Bearbeitungsposition und somit ohne Zeitverlust.

Die Mittel können als separate Messeinheit zusätzlich zu der Lichtschranke ausgebildet sein. Eine besonders vorteilhafte Weiterbildung der Erfindung sieht jedoch vor, dass die Lichtschranke zwei Empfänger aufweist, wobei insbesondere der zweite Empfänger auf der Seite des Senders angeordnet ist und dadurch, sofern das Werkstück den Laserstrahl unterbricht, den am Werkstück reflektierten Laserstrahl erfassen kann. Dadurch wird es ermöglich, nicht nur die Ausspannlänge des Werkstücks, sondern zusätzlich auch weitere geometrische Merkmale wie den Durchmesser oder die Breite des Werkstücks mit einer möglichst geringen Anzahl an Komponenten zu messen.

Die X-Achse ist vorteilhafterweise durch eine verschließbare Luke zwischen der Kabine und der Automatisierungskabine geführt und die Messbrücke an der Wandung zwischen der Kabine und der Automatisierungskabine, insbesondere innerhalb der Automatisierungskabine, angeordnet ist. Mittels der verschließbaren Luke kann eine möglichst gute Trennung von Arbeitsraum und Automatisierungsraum erfolgen, so dass der Roboter weitestgehend vor Verschmutzung geschützt werden kann. Je kleiner die Luke ausgebildet ist, desto schneller lässt sie sich öffnen und schließen, so dass der mit der Schleifmaschine erreichbare Durchsatz weiter erhöht werden kann. Vorzugsweise ist daher die Luke nur geringfügig breiter als die Werkstückspindel. Die Anordnung der Messbrücke an der Wandung zwischen der Kabine und der Automatisierungskabine ermöglicht eine zuverlässige und stabile Fixierung. Zudem kann diese Anordnung bei Bedarf eine Ausrichtung oder Justierung der Messbrücke ermöglichen. Innerhalb der Automatisierungskabine kann auch die Messbrücke weitgehend vor Verschmutzung geschützt werden.

Vorzugsweise ist die Werkzeugspindel von der Werkstückspindel komplett kinematisch getrennt, wobei Bewegungen entlang der X-Achse, um die A-Achse herum und um die C-Achse herum von der Werkstückspindel (deren Drehachse üblicherweise durch die A-Achse vorgegeben ist bzw. die A-Achse bildet) durchgeführt werden und Bewegungen entlang der Y-Achse und entlang der Z-Achse von der Werkzeugspindel durchgeführt werden. Diese Art der kinematischen Trennung führt nicht nur dazu, dass die Präzision der Positionierung verbessert werden kann, weil eine Anordnung mit drei aufeinander aufgebauten Linearachsen vermieden wird, sondern erlaubt es zudem, Werkstück und Werkzeug gleichzeitig zu wechseln, so dass der mit der Schleifmaschine erreichbare Werkstückdurchsatz erhöht werden kann, weil die für den Werkzeugwechsel bzw. für den Werkstückwechsel notwendigen Bewegungen zu den anzufahrenden Wechselpositionen von Werkzeugspindel bzw. Werkstückspindel gleichzeitig durchgeführt werden können.

Dafür kann es insbesondere sinnvoll sein, wenn die X-Achse verlängert ist. In einer besonders vorteilhaften Weise kann dies erreicht werden, indem an dem Maschinenbett ein Anbaumodul angeordnet ist, das die X-Achse verlängert und die Automatisierungskabine trägt. Das Anbaumodul kann aber auch einstückig als Erweiterung des Maschinenbetts über die Kabine hinaus ausgebildet sein.

Gemäß einer vorteilhaften Weiterbildung der Erfindung ist ein Palettiersystem oder eine Palettenablage vorhanden, dem der Roboter Werkstückrohlinge entnehmen kann und in dem der Roboter fertig bearbeitete Werkstücke ablegen kann.

Bei dem erfindungsgemäßen Verfahren zum Betrieb einer erfindungsgemäßen Schleifmaschine werden nacheinander in die Werkstückspindel eingespannte Werkstücke mit einem oder mehreren an der Werkzeugspindel eingespannten Schleifwerkzeugen bearbeitet. Ein Werkstückwechsel erfolgt mit einem außerhalb des Arbeitsraums in einer Automatisierungskabine angeordneten Roboter, indem die Werkstückspindel mit der Werkstückaufnahme, welche beispielsweise als Spannsystem ausgebildet ist, entlang der X-Achse an die Automatisierungskabine heran oder in die Automationskabine hinein gefahren wird. Insbesondere bei Verwendung von Linearmotoren und einem direkten Positionsmesssystem ist dies schneller und auch präziser als die Bewegung des Roboters, der zudem auf diese Weise geschützt wird.

Erfindungsgemäß ist vorgesehen, dass nach dem Werkstückwechsel beim Zurückfahren der Werkstückspindel von der Automatisierungskabine die Ausspannlänge des Werkstücks in der Werkstückspindel mittels einer Lichtschranke mit einem Sender und einem Empfänger bestimmt wird, indem
- bei dem Werkstückwechsel das Werkstück derart in die Werkstückspindel eingesetzt wird, dass in einer Wechselposition das in die Werkstückspindel eingesetzte Werkstück die Lichtschranke unterbricht,
- beim Zurückfahren der Werkstückspindel ermittelt wird, bei welcher Position der Werkstückspindel die Lichtschranke nicht mehr unterbrochen ist
- und diese Position in Bezug zu der Position der Werkstückspindel in der Wechselposition gesetzt wird.

Die Lichtschranke ist dabei insbesondere derart angeordnet, dass der Lichtstrahl der Lichtschranke die X-Achse quert und besonders bevorzugt senkrecht zu ihr angeordnet ist.

Ein derartiges Verfahren ermöglicht auf einfache Art und Weise eine Ermittlung der Ausspannlänge direkt während der Bewegen der Werkstückspindel auf dem Zustellweg von der Position der Werkstückspindel, in welcher der Werkstückwechsel erfolgt, zur Bearbeitungsposition im Arbeitsraum. Zusätzlicher Zeitaufwand zur Bestimmung der Ausspannlänge, wenn die Werkstückspindel an die Bearbeitungsposition im Arbeitsraum gefahren ist, entfällt somit vollständig, da die Bestimmung der Ausspannlänge während der ohnehin erforderlichen Zeit zur Bewegung der Werkstückspindel von der Wechselposition zur Bearbeitungsposition erfolgt. Auf diese Weise kann der mit der Schleifmaschine erreichbare Durchsatz signifikant erhöht werden.

Vorteilhafterweise erfolgt nach dem Werkstückwechsel, insbesondere beim Zurückfahren der Werkstückspindel von der Automatisierungskabine, eine elektrooptische Entfernungsmessung und/oder geometrische Vermessung erfolgt. Die elektrooptische Messung oder Vermessung kann beispielsweise Laser-basiert erfolgen, insbesondere basierend auf einer Laufzeitmessung, einer Phasenlagemessung oder dem Prinzip der Lasertriangulation. Dies ermöglicht die Ermittlung weiterer geometrischer Merkmale des Werkstücks, beispielsweise die Messung des Durchmessers oder der Breite des Werkstücks, aber auch die Vermessung der Konizität oder die Balligkeit oder sonstiger geometrischer Merkmale des Werkstücks oder auch der Werkstückspindel relativ zum Werkstück, insbesondere auf dem Zustellweg von der Wechselposition zur Bearbeitungsposition und somit ohne Zeitverlust.

Die Messung oder Vermessung kann mittels einer zusätzlich zu der Lichtschranke vorhandenen Messeinheit erfolgen. Vorzugsweise wird jedoch nach dem Werkstückwechsel beim Zurückfahren der Werkstückspindel von der Automatisierungskabine ein weiteres geometrisches Merkmal wie beispielsweise der Durchmesser oder die Breite des Werkstücks, die Konizität oder die Balligkeit des Werkstücks oder auch die relative Lage des Kühlkanals der Werkstückspindel zum Werkstück mittels der Lichtschranke bestimmt, indem bei durch das Werkstück unterbrochener Lichtschranke die Laufzeit, die Phasenlage und/oder der Winkel des an dem Werkstück reflektierten Laserstrahls bestimmt wird. Dadurch kann eine zusätzliche Vermessung des Werkstücks auf dem Zustellweg erfolgen.

Gemäß einer vorteilhaften Weiterbildung der Erfindung wird beim Werkstückwechsel überwacht, ob in der Wechselposition das in die Werkstückspindel eingesetzte Werkstück die Lichtschranke durch das Werkstück unterbricht, und ein Alarmsignal oder eine Fehlermeldung ausgegeben wird, falls die Lichtschranke nicht unterbrochen sein sollte. Dadurch kann auf einfache Art und Weise überprüft werden, ob der Werkstückwechsel korrekt erfolgt und das Werkstück in die Werkstückaufnahme eingesetzt ist.

Vorzugsweise werden zum Durchführen eines Werkstückwechsels und/oder zum Durchführen eines Werkzeugwechsels die Werkstückspindel und/oder die Werkzeugspindel kinematisch voneinander entkoppelt bewegt, wodurch es ermöglicht wird, sowohl die Werkstückspindel als auch die Werkzeugspindel gleichzeitig an ihre jeweilige Rüstposition, an der sie bestückt oder ihre Bestückung angepasst wird, zu senden.

Insbesondere können der Roboter und die Werkstückspindel vorpositioniert werden, so dass zur Angabe des bearbeiteten Werkstücks und/oder zur Übernahme des neuen Werkstücks, insbesondere als Rohling, lediglich noch eine Bewegung längs der X-Achse erfolgen muss, so dass die Werkstückspindel mit dem Spannsystem, das die Werkstückaufnahme bildet, und dem Werkstück sofort nach der Bearbeitung in die Automationskabine gefahren werden kann. Dabei kann die A-Achse vor dem Erreichen der Automationskabine durch eine Drehung um die C-Achse parallel oder in einem definierten Winkel zur X-Achse ausgerichtet werden.

Weil die Ansteuerung der X-Achse hochpräzise und mit höherer Präzision als die des Roboters arbeitet, ist es insbesondere vorteilhaft, wenn bei der Aufnahme des nächsten zu bearbeitenden Werkstücks die zum Entnehmen des Werkstücks aus dem Spannsystem, das die Werkstückaufnahme der Werkstückspindel bildet und/oder zum Einführen des nächsten Werkstücks in das Spannsystem, das die Werkstückaufnahme der Werkstückspindel bildet, nötige Bewegung in Richtung der X-Achse durch ein Verfahren der Werkstückspindel entlang der X-Achse erfolgt, insbesondere nachdem der Roboter die richtige Position relativ zur X-Achse eingenommen hat.

Ein Ausführungsbeispiel der Erfindung wird nachfolgend anhand der folgenden Figuren näher erläutert. Es zeigen
- Fig. 1: eine Seitenansicht eines Ausführungsbeispiels einer erfindungsgemäßen Schleifmaschine, bei welcher eine Seitenwand ausgeblendet ist, mit einer Werkstückspindel in einer Bearbeitungsposition,
- Fig. 2: eine perspektivische Ansicht der Schleifmaschine gemäß Fig. 1,
- Fig. 3: eine Seitenansicht eines Ausführungsbeispiels einer erfindungsgemäßen Schleifmaschine, bei welcher eine Seitenwand ausgeblendet ist, mit der Werkstückspindel in einer Wechselposition,
- Fig. 4: eine perspektivische Ansicht der Schleifmaschine gemäß Fig. 3,
- Fig. 5: eine Sicht entlang der X-Achse auf die Werkstückspindel der Schleifmaschine gemäß Fig. 3,
- Fig. 6: eine weitere perspektivische Ansicht der Schleifmaschine gemäß Fig. 3,
- Fig. 7: eine Ansicht eines der Schleifmaschine gemäß Fig. 1 mit entfernter Kabine, entfernter Automatisierungskabine sowie entfernter Werkstückaufnahme und
- Fig. 8: eine Draufsicht auf Komponenten der Schleifmaschine gemäß Fig. 1.

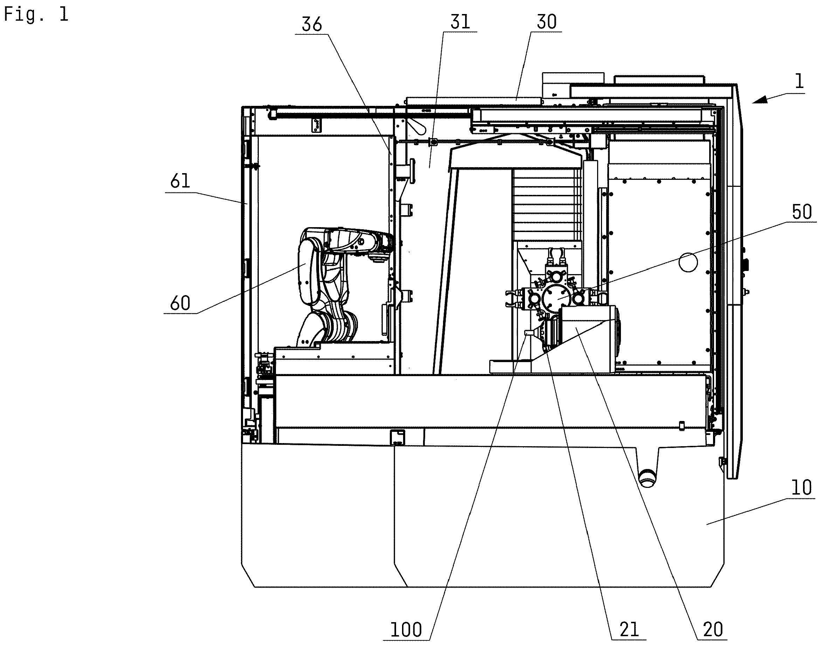

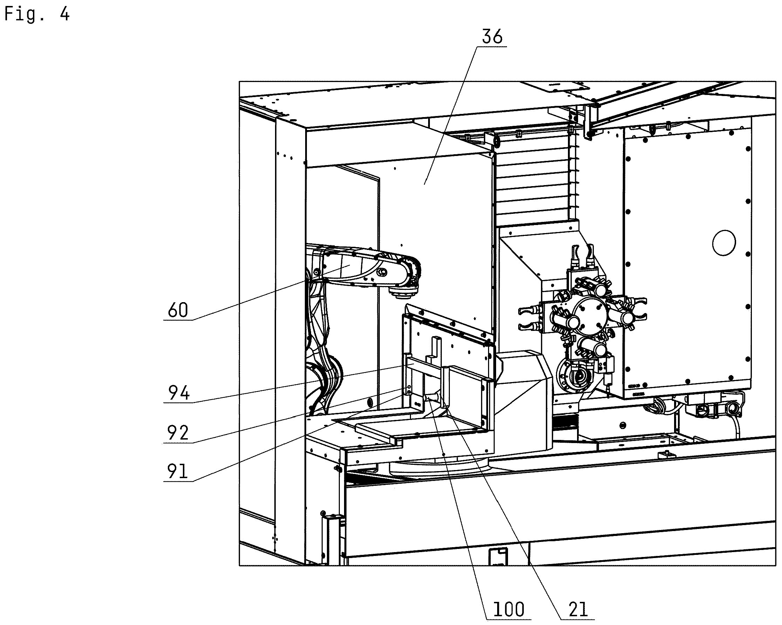

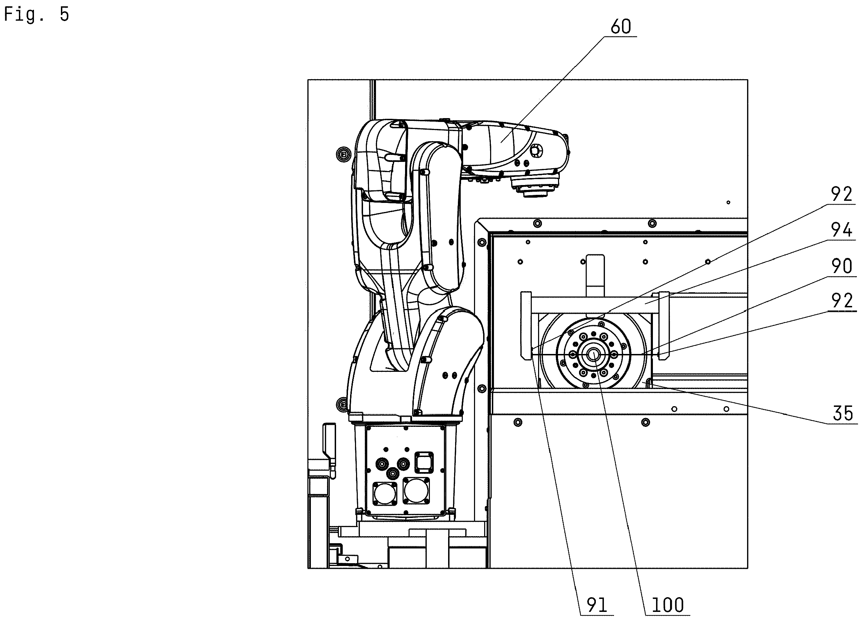

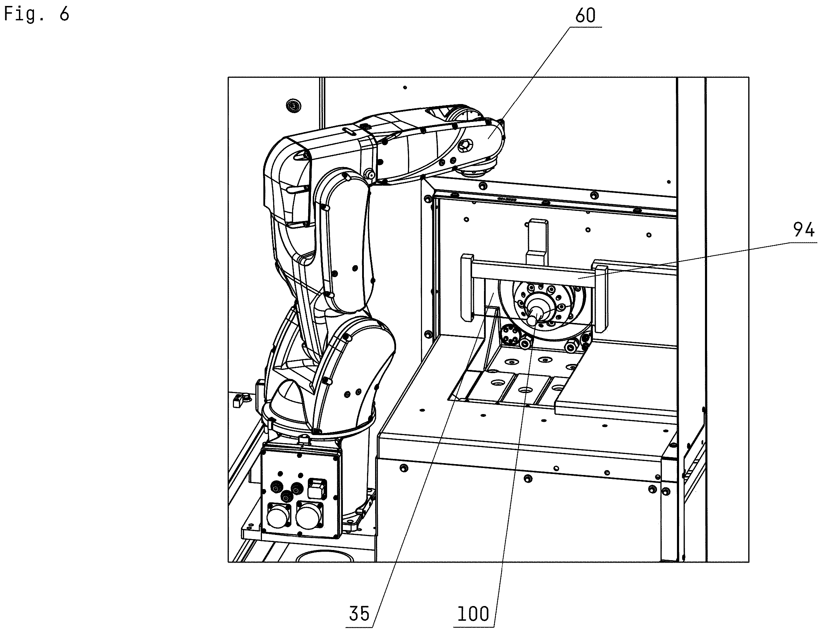

Die Figuren 1 bis 8 zeigen verschiedene Ansichten eines Ausführungsbeispiels einer erfindungsgemäßen Schleifmaschine 1, wobei gleiche Bezugsziffern gleiche oder funktionsgleiche Teile bezeichnen, zur besseren Übersicht jedoch nicht sämtliche Bezugsziffern in sämtlichen Figuren angegeben sind.

Die Schleifmaschine 1 umfasst ein Maschinenbett 10, das im Interesse einer hohen Genauigkeit in Abformtechnik unter Verwendung von Mineralguss zur verbesserten Schwingungsdämpfung gefertigt sein kann. Das Maschinenbett 10 trägt eine Werkstückspindel 20 mit einer Werkstückaufnahme 21 und eine Werkzeugspindel 40 mit einer Werkzeugaufnahme 41. Das Maschinenbett 10 kann ferner integrierte Kabelkanäle, einen durch Schwerkraft getriebenen Ablauf mit einem Auslauf, an dem ein optionales Sieb angeordnet ist, für Kühl- und Schmiermittel, integrierte Leitungen für Schmierung, Motorkühlung, Prozesskühlung und Erdung sowie eine integrierte Niveauüberwachung aufweisen, die allerdings in der Darstellung der Figuren nicht erkennbar sind, weil sie durch andere Komponenten verdeckt werden.

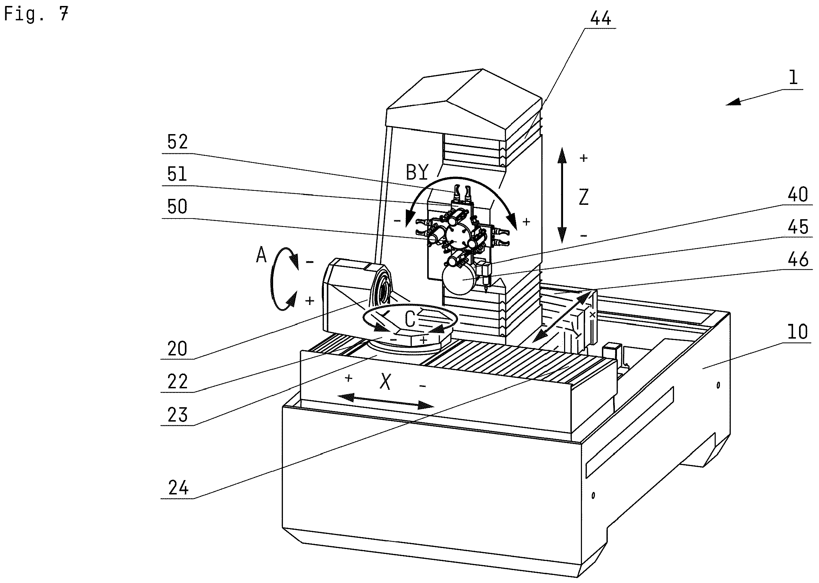

Die Werkstückspindel 20, deren Werkstückaufnahme 21 die horizontal verlaufende A-Achse der Schleifmaschine 1 definiert, kann in einen T-Nutentisch 22 integriert sein, der um die vertikal verlaufende C-Achse herum drehbar auf einem Schlitten 23 längs der X-Achse horizontal verfahrbar ausgebildet sein kann. Der Schlitten 23 läuft insbesondere auf Schienen, die auf dem Maschinenbett 10 angeordnet sind, die aber in Figur 7 ebenso wie der Linearmotor, der den Schlitten 23 antreibt und das direkte, absolute Messsystem, das seine Position überwacht, unter einer Abdeckung 24 liegen und deshalb nicht sichtbar sind.

Die Werkzeugspindel 40, die beispielsweise mit einem darin aufgenommenen Werkzeug 45 in Gestalt eines Schleifscheibenpakets dargestellt ist, kann von einem Schlitten 42 getragen sein, der auf einem vertikal auf einem weiteren Schlitten 43 angeordneten Schienensystem, das eine vertikale Z-Achse definiert, linear verfahrbar längs dieser Z-Achse in vertikaler Richtung angeordnet sein kann. Auch dieses Schienensystem und das ebenso wie der Antrieb und die Positionsüberwachung des Schlittens 43 sind in den Figuren nicht erkennbar, weil sie unter einer Abdeckung 44 angeordnet sind.

Der weitere Schlitten 43 läuft seinerseits auf Schienen, die auf dem Maschinenbett 10 angeordnet sind, die aber in den Figuren ebenso wie der Linearmotor, der den weiteren Schlitten 43 antreibt und das direkte, absolute Messsystem, das seine Position überwacht, unter der Abdeckung 46 liegen und deshalb nicht sichtbar sind. Diese Schienen definieren die senkrecht zur X-Achse verlaufende, ebenfalls horizontale Y-Achse.

Auf diese Weise ist bei der Schleifmaschine 1 die Werkzeugspindel 20 von der Werkstückspindel 40 komplett kinematisch getrennt, wobei Bewegungen entlang der X-Achse, um die A-Achse herum und um die C-Achse herum von der Werkstückspindel 20 durchgeführt werden und Bewegungen entlang der Y-Achse und entlang der Z-Achse von der Werkzeugspindel 40 durchgeführt werden.

Ebenfalls von dem Schlitten 42 getragen wird ein Werkzeugwechsler 50, der in diesem Fall für insgesamt vier Werkzeuge ausgelegt ist, von denen aber in den Figuren nur das gerade in die Werkzeugspindel 40 aufgenommene Werkzeug 45 dargestellt ist, um den Aufbau des Werkzeugwechslers 50 in den Figuren genauer darzustellen.

Der Werkzeugwechsler 50, der demzufolge gemeinsam mit der Werkzeugspindel 40 in Richtung der Y-Achse und in Richtung der Z-Achse bewegt wird, besitzt vorliegend eine Trägerplatte 51 mit vier kreuzförmig angeordneten, gleich langen Armen, an deren Ende jeweils ein Greifer 52 angeordnet sein kann, der in bestücktem Zustand ein Werkzeug 45, insbesondere ein Schleifscheibenpaket, trägt. Die Trägerplatte 51 ist insbesondere um eine parallel zur Y-Achse verlaufende, angetriebene BY-Achse herum drehbar; darüber hinaus kann sie in Richtung parallel zu dieser Achse in die in Figur 7 auf den Betrachter zu und zurück verlaufende Richtung bewegt werden.

Dies erlaubt es, das während des Schleifens von der Werkzeugspindel 40 gehaltene Werkzeug 45, wenn ein Werkzeugwechsel notwendig ist, mit dem zugehörigen Greifer 52 zu greifen und nach Lösung der Spindelklemmung durch eine lineare Bewegung, die in Figur 7 in Richtung auf den Betrachter zu verläuft, parallel zur BY-Achse auszuheben. Anschließend kann der Werkzeugwechsler 50 beispielsweise um 90° gedreht werden, so dass das vom Greifer 52 des nächsten Arms gehaltene nächste Werkzeug 45 so positioniert wird, dass es möglich ist, das Werkzeug 45 durch eine lineare Bewegung, die in Figur 1 in Richtung vom Betrachter weg verläuft, parallel zur BY-Achse in die Werkzeugaufnahme 41 der Werkzeugspindel 40 einzuführen, die Spindelklemmung zu aktivieren und dann mit dem Greifer 52 loszulassen, um mit der Bearbeitung fortfahren zu können. Dieser Greifer 52 bleibt also während der Bearbeitung in einer Position, in der er beim nächsten Werkzeugwechsel nur noch geschlossen werden muss, um das auszuwechselnde Werkzeug 45 zu fassen. Auf diese Weise ist ein sehr schneller Werkzeugwechsel möglich, weil nur minimale Fahrwege zurückgelegt werden müssen.

Auf dem Maschinenbett 10 ist eine Kabine 30 angeordnet, die einen Arbeitsraum 31 umschließt, in dem insbesondere die Werkzeugspindel 40 und die Werkstückspindel 20 angeordnet sind.

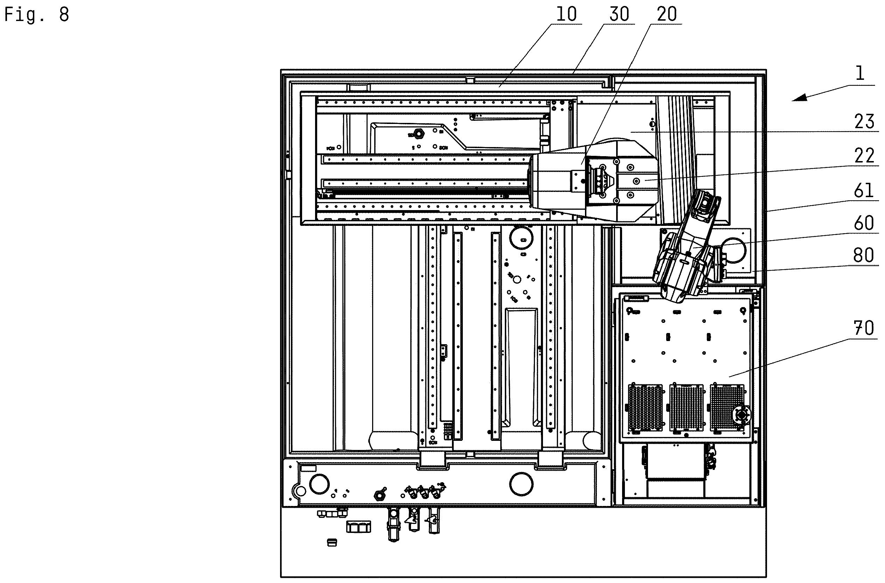

Figur 8 zeigt eine Draufsicht auf Komponenten der Schleifmaschine gemäß Figur 7 in Kombination mit einer Automatisierung durch einen Roboter 60 und ein Palettiersystem 70. Weggelassen wurde dabei der gesamte Aufbau, der die Werkzeugspindel 40 und den Werkzeugwechsler 50 trägt, sowie die Abdeckungen 24, 44 und 45, so dass zusätzliche Detail des Maschinenbetts 10, insbesondere die Schienen, die die X-Achse und die Y-Achse definieren, erkennbar sind.

Der insbesondere als Roboterarm ausgeführte Roboter 60 ist außerhalb des Arbeitsraums 31 in einer Automatisierungskabine 61 angeordnet. Die Automatisierungskabine 61 und der Roboter 60 werden in diesem Ausführungsbeispiel von einem an dem Maschinenbett 10 angeordneten Anbaumodul 80 getragen, das insbesondere, wie man aus der Position der in der Werkstückwechselposition dargestellten Werkstückspindel 20 und des sie tragenden T-Nutentisches 22 sowie des Schlittens 23 ableiten kann, die X-Achse bzw. das sie definierende Schienensystem verlängert.

Auf der dem T-Nutentisch 22 gegenüber liegenden Seite des Roboters 60 befindet sich das Palettiersystem 70. Dementsprechend kann der Roboter 60 durch eine einfache Schwenkbewegung bearbeitete Werkstücke 100 im Palettiersystem 70 ablegen, einen neuen Werkstückrohling zur Fortsetzung der Bearbeitung greifen und der Werkstückspindel 20 zuführen, ohne in den Arbeitsraum 31 einzugreifen. Besonders vorteilhaft ist es, wenn die Bewegung des Roboters 60 so gestaltet wird, dass der Roboter 60 mit seinem Werkstückgreifer so vorpositioniert wird, dass bei der Übergabe des fertig bearbeiteten Werkstücks 100 der Schlitten 23 einen Abschnitt des noch in der Werkstückaufnahme 21 aufgenommenen Werkstücks 100 in den geöffnete Werkstückgreifer des Roboters 60 hineinfährt, der dieses dann ergreif, ehe es freigegeben wird und bei der Übergabe des nächsten Werkstückrohlings an die Werkstückspindel 20 der Schlitten 23 einen Abschnitt des noch im Werkstückgreifer des Roboters 60 gehaltenen Werkstücks 100 in die geöffnete Werkstückaufnahme 21 der Werkstückspindel 20 hineinfährt, die dieses dann beispielsweise mit einem Dehnspannfutter fixiert, ehe der Werkstückgreifer des Roboters 60 loslässt. Da die Bewegung des Schlittens 23 längs der X-Achse schneller erfolgt und hochpräzise gesteuert ist als die des Roboters 60, wird so nicht nur Zeit gespart, sondern es werden auch Übergabefehler effektiv vermieden.

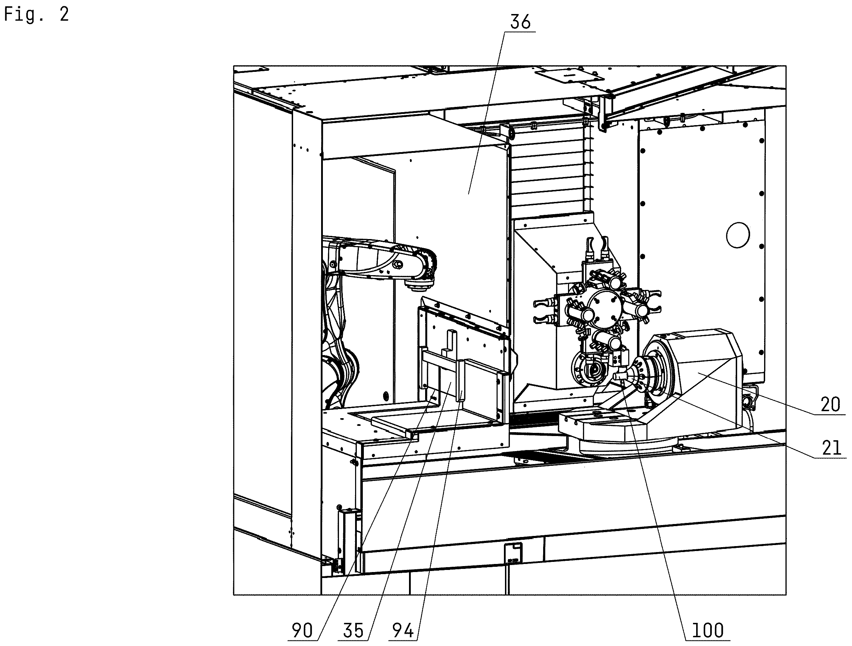

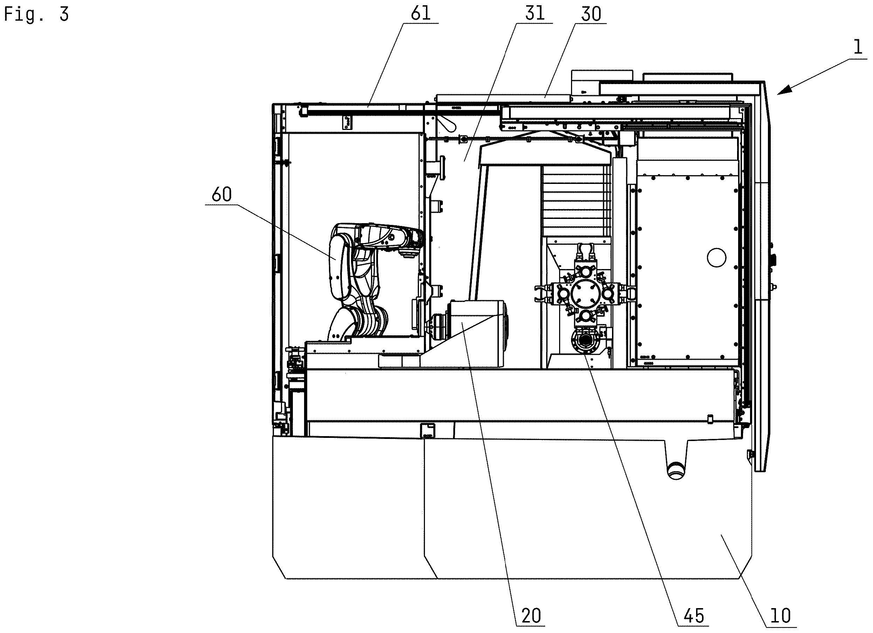

In den Figuren 1 und 2 ist die Werkstückspindel 20 mit dem Werkstück 100 in einer Bearbeitungsposition dargestellt, in welcher die Bearbeitung des Werkstücks 100 durch das Werkzeug 45 erfolgen kann. In den Figuren 3 bis 6 ist die Werkstückspindel 20 mit dem Werkstück 100 in einer Wechselposition dargestellt, in welcher der Roboter 60 das bearbeitete Werkstück 100 entnehmen und ein neu zu bearbeitendes Werkstück 100 einsetzen kann.

Zwischen der Kabine 30 und der Automatisierungskabine 61 ist eine Wandung 36 angeordnet, die die Innenräume der Kabine 30 und der Automatisierungskabine 61 voneinander trennt. Die Wandung 36 weist dabei lediglich eine verschließbare Luke 35 auf, durch welche insbesondere die X-Achse geführt ist, so dass der Werkstückwechsel durch die Luke 35 erfolgen kann, indem die Werkstückspindel 20 entlang der X-Achse an die Automatisierungskabine 61 heran oder insbesondere durch die Luke 35 in diese hinein gefahren werden kann, so dass der Roboter 60 beim Werkstückwechsel nicht in den Arbeitsraum 31 eingreift.

Die Schleifmaschine 1 weist eine Lichtschranke 90 mit einem Sender 91 und einem Empfänger 92 auf, mit welcher die Ausspannlänge des Werkstücks 100 in der Werkstückspindel 20 beim Zurückfahren der Werkstückspindel 20 von der Automatisierungskabine 61 nach dem Werkstückwechsel erfolgen kann. Dazu ist die Lichtschranke 90 an der X-Achse angeordnet insbesondere derart, dass ein Lichtstrahl der Lichtschranke 90 die X-Achse quert, insbesondere senkrecht quert. Der Sender 91 und der Empfänger 92 sind insbesondere auf gegenüberliegenden Seiten der X-Achse angeordnet. Die in den Figuren dargestellten Positionen des Senders 91 und des Empfängers 92 können selbstverständlich vertauscht sein.

Die Bestimmung der Ausspannlänge erfolgt dadurch, dass bei dem Werkstückwechsel das Werkstück 100 derart in die Werkstückspindel 20 eingesetzt wird, dass in der Wechselposition der Werkstückspindel 20 das in die Werkstückspindel 20 eingesetzte Werkstück 100 die Lichtschranke 90 unterbricht. Ein Unterbrechen ist dadurch gegeben, dass das Werkstück 100 zwischen dem Sender 91 und dem Empfänger 92 angeordnet ist und von dem Empfänger 92 kein Signal des Senders 91 detektiert werden kann (vgl. Figuren 3 bis 6). Die Wechselposition wird insbesondere dadurch erfasst, dass die Position des Schlittens 23 entlang der X-Achse mittels des direkten, absoluten Messsystems erfasst wird. Beim Zurückfahren der Werkstückspindel 20 wird ermittelt, bei welcher Position der Werkstückspindel 20, insbesondere des Schlittens 23 entlang der X-Achse, die Lichtschranke 90 nicht mehr unterbrochen ist, also ein Signal in dem Empfänger 92 detektiert wird. Anschließend wird diese Position in Bezug zu der Position der Werkstückspindel 20 in der Wechselposition gesetzt, wodurch - gegebenenfalls bei Berücksichtigung der relativen Position zwischen Werkstückspindel 20 und Lichtschranke 90 in der Wechselposition - auf diese Weise die Ausspannlänge des Werkstücks 100 ermittelt. Dies erfolgt somit direkt auf dem Zustellweg des Werkstücks 100, so dass ein zeitaufwändiges Vermessen des Werkstücks 100 an der Bearbeitungsposition (vgl. Figuren 1 und 2) der Werkstückspindel 20 entfallen kann.

Beim Werkstückwechsel kann überwacht werden, ob in der Wechselposition das in die Werkstückspindel 20 eingesetzte Werkstück 100 die Lichtschranke 90 unterbricht, und ein Alarmsignal ausgegeben werden, falls die Lichtschranke 90 nicht unterbrochen sein sollte, um eine Information darüber zu erhalten, ob der Werkstückwechsel korrekt erfolgt ist.

Der Sender 91 ist insbesondere als Laser ausgebildet, um eine hohe Messgenauigkeit ermöglichen zu können. Wie in den Figuren 1 bis 6 erkennbar, können der Sender 91 und der Empfänger 92 an einer Messbrücke 94 angeordnet sein. Auf diese Weise können der Sender 91 und der Empfänger 92 relativ zueinander fixiert sein und die Montage der Lichtschranke 90 auf einfache Art und Weise erfolgen. Es besteht die Möglichkeit, dass der Sender 91 und der Empfänger 92 an der Messbrücke 94 verschiebbar angeordnet sind, um bei Bedarf eine Feinjustierung von Sender 91 und Empfänger 92 relativ zueinander vornehmen zu können. Die Messbrücke 94 ist insbesondere U-förmig ausgebildet und umgreift die X-Achse, so dass der Sender 91 und der Empfänger 92 auf unterschiedlichen Seiten der X-Achse, und insbesondere des Werkstücks 100, angeordnet sind. Die Messbrücke 94 ist insbesondere an der Wandung 36 zwischen der Kabine 30 und der Automatisierungskabine 61, insbesondere innerhalb der Automatisierungskabine 61, angeordnet (vgl. insbesondere Figuren 2, 4, 5 und 6). Die Messbrücke 94 kann in Richtung senkrecht zur X-Achse, insbesondere in der Höhe, verschiebbar angeordnet sein, um sie bei unterschiedlichen Geometrien des Werkstücks 100 nötigenfalls auf einfache Art und Weise justieren zu können.

Es besteht die Möglichkeit, dass auf der Seite des Senders 91 ein zweiter Empfängers 92 neben dem Sender 92 angeordnet ist, um den an dem Werkstück 100 reflektierten Laserstrahl zu detektieren und auf diese Weise, insbesondere durch Ermittlung der Laufzeit des Laserstrahls vom Sender 91 bis zum Werkstück 100 und zurück zu dem zweiten Empfänger 92 und beispielsweise Umrechnung dieses Werts in einen Längenwert, welcher von dem Abstand zwischen Drehachse der Werkzeugspindel 20 und Sender 91 abgezogen wird, weitere geometrische Merkmale des Werkstücks 100 wie beispielsweise den Durchmesser oder die Breite des Werkstücks 100 ebenfalls beim Zurückfahren der Werkstückspindel 20 auf dem Zustellweg des Werkstücks 100 erfassen zu können.

### Bezugszeichenliste

- 1: Schleifmaschine
- 10: Maschinenbett
- 20: Werkstückspindel
- 21: Werkstückaufnahme
- 22: T-Nutentisch
- 23: Schlitten
- 24: Abdeckung
- 30: Kabine
- 31: Arbeitsraum
- 35: Luke
- 36: Wandung
- 40: Werkzeugspindel
- 41: Werkzeugaufnahme
- 42: Schlitten
- 43: Schlitten
- 44: Abdeckung
- 45: Werkzeug
- 46: Abdeckung
- 50: Werkzeugwechsler
- 51: Trägerplatte
- 52: Greifer
- 60: Roboter
- 61: Automatisierungskabine
- 70: Palettiersystem
- 80: Anbaumodul
- 90: Lichtschranke
- 91: Sender
- 92: Empfänger
- 94: Messbrücke
- 100: Werkstück

## Patentansprüche

1. Schleifmaschine (1) mit einem Maschinenbett (10), auf dem eine Werkstückspindel (20) mit einer Werkstückaufnahme (21) und eine Werkzeugspindel (40) mit einer Werkzeugaufnahme (41) so angeordnet sind, dass ein in die Werkstückspindel (20) aufgenommenes Werkstück (100) relativ zu einem in der Werkzeugaufnahme (40) aufgenommenen Werkzeug (45)
- entlang einer X-Achse, die eine in eine erste Richtung parallel zur Oberfläche des Maschinenbetts (10) verlaufende Achse ist, verfahrbar ist,
- entlang einer Y-Achse, die eine in eine zweite Richtung parallel zur Oberfläche des Maschinenbetts (10) verlaufende Achse ist, verfahrbar ist,
- entlang einer Z-Achse, die eine senkrecht zur Oberfläche des Maschinenbetts (10) verlaufende Achse ist, verfahrbar ist,
- um eine A-Achse, die eine parallel zur Oberfläche des Maschinenbetts (10) verlaufende Achse ist, herum drehbar ist, und
- um eine C-Achse, die eine senkrecht zur Oberfläche des Maschinenbetts (10) verlaufende Achse ist, herum drehbar ist,
wobei auf dem Maschinenbett (10) eine Kabine (30) angeordnet ist, die einen Arbeitsraum (31) definiert, in dem insbesondere die Werkzeugspindel (40) und die Werkstückspindel (20) zur Bearbeitung von Werkstücken (100) angeordnet sind,
wobei die Schleifmaschine (1) einen Roboter (60) für den Werkstückwechsel aufweist, welcher außerhalb des Arbeitsraums (31) in einer Automatisierungskabine (61) angeordnet ist, wobei die Werkstückspindel (20) auf der X-Achse für einen Werkstückwechsel an die Automatisierungskabine (61) heran oder in die Automatisierungskabine (61) hinein gefahren werden kann, so dass der Roboter(60) beim Werkstückwechsel nicht in den Arbeitsraum (31) eingreift,
**dadurch gekennzeichnet, dass** die Schleifmaschine (1) eine Lichtschranke (90) mit einem Sender (91) und wenigstens einem Empfänger (92) zur Bestimmung der Ausspannlänge des Werkstücks (100) in der Werkstückspindel (20) beim Zurückfahren der Werkstückspindel (20) von der Automatisierungskabine (61) nach dem Werkstückwechsel aufweist.

2. Schleifmaschine nach Anspruch 1,
**dadurch gekennzeichnet, dass** der Sender (91) als Laser ausgebildet ist.

3. Schleifmaschine nach einem der vorhergehenden Ansprüche,
**dadurch gekennzeichnet, dass** der Sender (91) und der Empfänger (92) an einer Messbrücke (94) angeordnet sind, welche die X-Achse umgreift.

4. Schleifmaschine nach einem der vorhergehenden Ansprüche,
**dadurch gekennzeichnet, dass** die Messbrücke (94) in Richtung senkrecht zur X-Achse verschiebbar angeordnet ist.

5. Schleifmaschine nach einem der vorhergehenden Ansprüche,
**dadurch gekennzeichnet, dass** die Schleifmaschine (1) Mittel zur elektrooptischen Entfernungsmessung und/oder geometrischen Vermessung umfasst.

6. Schleifmaschine nach einem der vorhergehenden Ansprüche,
**dadurch gekennzeichnet, dass** die Lichtschranke (90) zwei Empfänger (92) aufweist.

7. Schleifmaschine nach einem der vorhergehenden Ansprüche,
**dadurch gekennzeichnet, dass** die X-Achse durch eine verschließbare Luke (35) zwischen der Kabine (30) und der Automatisierungskabine (61) geführt ist und die Messbrücke (94) an der Wandung (36) zwischen der Kabine (30) und der Automatisierungskabine (61), insbesondere innerhalb der Automatisierungskabine (61), angeordnet ist.

8. Schleifmaschine nach einem der vorhergehenden Ansprüche,
**dadurch gekennzeichnet, dass** die Werkzeugspindel (40) von der Werkstückspindel (20) komplett kinematisch getrennt ist, wobei Bewegungen entlang der X-Achse, um die A-Achse herum und um die C-Achse herum von der Werkstückspindel (20) durchgeführt werden und Bewegungen entlang der Y-Achse und entlang der Z-Achse von der Werkzeugspindel (40) durchgeführt werden.

9. Schleifmaschine nach einem der vorhergehenden Ansprüche,
**dadurch gekennzeichnet, dass** an dem Maschinenbett (10) ein Anbaumodul (80) angeordnet ist, das die X-Achse verlängert und die Automatisierungskabine (61) trägt.

10. Schleifmaschine nach einem der vorhergehenden Ansprüche,
**dadurch gekennzeichnet, dass** angrenzend zur Automatisierungskabine (61) ein Palettiersystem (70) oder eine Palettenablage vorhanden ist.

11. Verfahren zum Betrieb einer Schleifmaschine (1) nach einem der vorstehenden Ansprüche, bei dem nacheinander in die Werkstückspindel (20) eingespannte Werkstücke (100) mit einem oder mehreren an der Werkzeugspindel (40) eingespannten Werkzeugen (45) durch Schleifen bearbeitet werden,
wobei ein Werkstückwechsel mit einem außerhalb des Arbeitsraums (31) in einer Automatisierungskabine (61) angeordneten Roboter (60) erfolgt, indem die Werkstückspindel (20) mit der Werkstückaufnahme (21) entlang der X-Achse an die Automatisierungskabine (61) heran oder in die Automationskabine (61) gefahren wird,
**dadurch gekennzeichnet, dass** nach dem Werkstückwechsel beim Zurückfahren der Werkstückspindel (20) von der Automatisierungskabine (61) die Ausspannlänge des Werkstücks (100) in der Werkstückspindel (20) mittels einer Lichtschranke (90) mit einem Sender (91) und einem Empfänger (92) bestimmt wird, indem
- bei dem Werkstückwechsel das Werkstück (100) derart in die Werkstückspindel (20) eingesetzt wird, dass in einer Wechselposition das in die Werkstückspindel (20) eingesetzte Werkstück (100) die Lichtschranke (90) unterbricht,
- beim Zurückfahren der Werkstückspindel (20) ermittelt wird, bei welcher Position der Werkstückspindel (20) die Lichtschranke (90) nicht mehr unterbrochen ist
- und diese Position in Bezug zu der Position der Werkstückspindel (20) in der Wechselposition gesetzt wird.

12. Verfahren nach Anspruch 11,
**dadurch gekennzeichnet, dass** nach dem Werkstückwechsel, insbesondere beim Zurückfahren der Werkstückspindel (20) von der Automatisierungskabine (61), eine elektrooptische Entfernungsmessung und/oder geometrische Vermessung erfolgt.

13. Verfahren nach Anspruch 11 oder 12,
**dadurch gekennzeichnet, dass** nach dem Werkstückwechsel beim Zurückfahren der Werkstückspindel (20) von der Automatisierungskabine (61) ein weiteres geometrisches Merkmal des Werkstücks (100) mittels der Lichtschranke (90) bestimmt wird, indem bei durch das Werkstück (100) unterbrochener Lichtschranke (90) die Laufzeit, die Phasenlage und/oder der Winkel des an dem Werkstück (100) reflektierten Laserstrahls bestimmt wird.

14. Verfahren nach einem der Ansprüche 11 bis 13,
**dadurch gekennzeichnet, dass** beim Werkstückwechsel überwacht wird, ob in der Wechselposition das in die Werkstückspindel (20) eingesetzte Werkstück (100) die Lichtschranke (90) durch das Werkstück (100) unterbricht, und ein Alarmsignal oder eine Fehlermeldung ausgegeben wird, falls die Lichtschranke (90) nicht unterbrochen sein sollte.

15. Verfahren nach einem der Ansprüche 11 bis 14,
**dadurch gekennzeichnet, dass** zum Durchführen eines Werkstückwechsels und/oder zum Durchführen eines Werkzeugwechsels die Werkstückspindel (20) und/oder die Werkzeugspindel (40) kinematisch voneinander entkoppelt bewegt werden.

16. Verfahren nach einem der Ansprüche 11 bis 15,
**dadurch gekennzeichnet, dass** bei der Aufnahme des nächsten zu bearbeitenden Werkstücks (100) die zum Entnehmen des Werkstücks (100) aus der Werkstückaufnahme (21) der Werkstückspindel (20) und/oder zum Einführen des nächsten Werkstücks in die Werkzeugaufnahme (21) der Werkstückspindel (20) nötige Bewegung in Richtung der X-Achse durch ein Verfahren der Werkstückspindel (20) entlang der X-Achse erfolgt.

## Geänderte Patentansprüche

### Geänderte Patentansprüche gemäss Regel 137(2) EPÜ.

1. Schleifmaschine (1) mit einem Maschinenbett (10), auf dem eine Werkstückspindel (20) mit einer Werkstückaufnahme (21) und eine Werkzeugspindel (40) mit einer Werkzeugaufnahme (41) so angeordnet sind, dass ein in die Werkstückspindel (20) aufgenommenes Werkstück (100) relativ zu einem in der Werkzeugaufnahme (40) aufgenommenen Werkzeug (45)
- entlang einer X-Achse, die eine in eine erste Richtung parallel zur Oberfläche des Maschinenbetts (10) verlaufende Achse ist, verfahrbar ist,
- entlang einer Y-Achse, die eine in eine zweite Richtung parallel zur Oberfläche des Maschinenbetts (10) verlaufende Achse ist, verfahrbar ist,
- entlang einer Z-Achse, die eine senkrecht zur Oberfläche des Maschinenbetts (10) verlaufende Achse ist, verfahrbar ist,
- um eine A-Achse, die eine parallel zur Oberfläche des Maschinenbetts (10) verlaufende Achse ist, herum drehbar ist, und
- um eine C-Achse, die eine senkrecht zur Oberfläche des Maschinenbetts (10) verlaufende Achse ist, herum drehbar ist,
wobei auf dem Maschinenbett (10) eine Kabine (30) angeordnet ist, die einen Arbeitsraum (31) definiert, in dem insbesondere die Werkzeugspindel (40) und die Werkstückspindel (20) zur Bearbeitung von Werkstücken (100) angeordnet sind,
wobei die Schleifmaschine (1) einen Roboter (60) für den Werkstückwechsel aufweist, welcher außerhalb des Arbeitsraums (31) in einer Automatisierungskabine (61) angeordnet ist, wobei die Werkstückspindel (20) auf der X-Achse für einen Werkstückwechsel an die Automatisierungskabine (61) heran oder in die Automatisierungskabine (61) hinein gefahren werden kann, so dass der Roboter(60) beim Werkstückwechsel nicht in den Arbeitsraum (31) eingreift,
wobei die Werkzeugspindel (40) von der Werkstückspindel (20) komplett kinematisch getrennt ist, wobei Bewegungen entlang der X-Achse, um die A-Achse herum und um die C-Achse herum von der Werkstückspindel (20) durchgeführt werden und Bewegungen entlang der Y-Achse und entlang der Z-Achse von der Werkzeugspindel (40) durchgeführt werden,
**dadurch gekennzeichnet, dass** die Schleifmaschine (1) eine Lichtschranke (90) mit einem Sender (91) und wenigstens einem Empfänger (92) zur Bestimmung der Ausspannlänge des Werkstücks (100) in der Werkstückspindel (20) beim Zurückfahren der Werkstückspindel (20) von der Automatisierungskabine (61) nach dem Werkstückwechsel aufweist.

2. Schleifmaschine nach Anspruch 1,
**dadurch gekennzeichnet, dass** der Sender (91) als Laser ausgebildet ist.

3. Schleifmaschine nach einem der vorhergehenden Ansprüche,
**dadurch gekennzeichnet, dass** der Sender (91) und der Empfänger (92) an einer Messbrücke (94) angeordnet sind, welche die X-Achse umgreift.

4. Schleifmaschine nach Anspruch 3,
**dadurch gekennzeichnet, dass** die Messbrücke (94) in Richtung senkrecht zur X-Achse verschiebbar angeordnet ist.

5. Schleifmaschine nach einem der vorhergehenden Ansprüche,
**dadurch gekennzeichnet, dass** die Schleifmaschine (1) Mittel zur elektrooptischen Entfernungsmessung und/oder geometrischen Vermessung umfasst.

6. Schleifmaschine nach einem der vorhergehenden Ansprüche,
**dadurch gekennzeichnet, dass** die Lichtschranke (90) zwei Empfänger (92) aufweist.

7. Schleifmaschine nach einem der vorhergehenden Ansprüche,
**dadurch gekennzeichnet, dass** die X-Achse durch eine verschließbare Luke (35) zwischen der Kabine (30) und der Automatisierungskabine (61) geführt ist und die Messbrücke (94) an der Wandung (36) zwischen der Kabine (30) und der Automatisierungskabine (61), insbesondere innerhalb der Automatisierungskabine (61), angeordnet ist.

8. Schleifmaschine nach einem der vorhergehenden Ansprüche,
**dadurch gekennzeichnet, dass** an dem Maschinenbett (10) ein Anbaumodul (80) angeordnet ist, das die X-Achse verlängert und die Automatisierungskabine (61) trägt.

9. Schleifmaschine nach einem der vorhergehenden Ansprüche,
**dadurch gekennzeichnet, dass** angrenzend zur Automatisierungskabine (61) ein Palettiersystem (70) oder eine Palettenablage vorhanden ist.

10. Verfahren zum Betrieb einer Schleifmaschine (1) nach einem der vorstehenden Ansprüche, bei dem nacheinander in die Werkstückspindel (20) eingespannte Werkstücke (100) mit einem oder mehreren an der Werkzeugspindel (40) eingespannten Werkzeugen (45) durch Schleifen bearbeitet werden,
wobei ein Werkstückwechsel mit einem außerhalb des Arbeitsraums (31) in einer Automatisierungskabine (61) angeordneten Roboter (60) erfolgt, indem die Werkstückspindel (20) mit der Werkstückaufnahme (21) entlang der X-Achse an die Automatisierungskabine (61) heran oder in die Automationskabine (61) gefahren wird,
**dadurch gekennzeichnet, dass** nach dem Werkstückwechsel beim Zurückfahren der Werkstückspindel (20) von der Automatisierungskabine (61) die Ausspannlänge des Werkstücks (100) in der Werkstückspindel (20) mittels einer Lichtschranke (90) mit einem Sender (91) und einem Empfänger (92) bestimmt wird, indem
- bei dem Werkstückwechsel das Werkstück (100) derart in die Werkstückspindel (20) eingesetzt wird, dass in einer Wechselposition das in die Werkstückspindel (20) eingesetzte Werkstück (100) die Lichtschranke (90) unterbricht,
- beim Zurückfahren der Werkstückspindel (20) ermittelt wird, bei welcher Position der Werkstückspindel (20) die Lichtschranke (90) nicht mehr unterbrochen ist
- und diese Position in Bezug zu der Position der Werkstückspindel (20) in der Wechselposition gesetzt wird.

11. Verfahren nach Anspruch 10,
**dadurch gekennzeichnet, dass** nach dem Werkstückwechsel, insbesondere beim Zurückfahren der Werkstückspindel (20) von der Automatisierungskabine (61), eine elektrooptische Entfernungsmessung und/oder geometrische Vermessung erfolgt.

12. Verfahren nach Anspruch 10 oder 11,
**dadurch gekennzeichnet, dass** nach dem Werkstückwechsel beim Zurückfahren der Werkstückspindel (20) von der Automatisierungskabine (61) ein weiteres geometrisches Merkmal des Werkstücks (100) mittels der Lichtschranke (90) bestimmt wird, indem bei durch das Werkstück (100) unterbrochener Lichtschranke (90) die Laufzeit, die Phasenlage und/oder der Winkel des an dem Werkstück (100) reflektierten Laserstrahls bestimmt wird.

13. Verfahren nach einem der Ansprüche 10 bis 12,
**dadurch gekennzeichnet, dass** beim Werkstückwechsel überwacht wird, ob in der Wechselposition das in die Werkstückspindel (20) eingesetzte Werkstück (100) die Lichtschranke (90) durch das Werkstück (100) unterbricht, und ein Alarmsignal oder eine Fehlermeldung ausgegeben wird, falls die Lichtschranke (90) nicht unterbrochen sein sollte.

14. Verfahren nach einem der Ansprüche 10 bis 13,
**dadurch gekennzeichnet, dass** zum Durchführen eines Werkstückwechsels und/oder zum Durchführen eines Werkzeugwechsels die Werkstückspindel (20) und/oder die Werkzeugspindel (40) kinematisch voneinander entkoppelt bewegt werden.

15. Verfahren nach einem der Ansprüche 10 bis 14,
**dadurch gekennzeichnet, dass** bei der Aufnahme des nächsten zu bearbeitenden Werkstücks (100) die zum Entnehmen des Werkstücks (100) aus der Werkstückaufnahme (21) der Werkstückspindel (20) und/oder zum Einführen des nächsten Werkstücks in die Werkzeugaufnahme (21) der Werkstückspindel (20) nötige Bewegung in Richtung der X-Achse durch ein Verfahren der Werkstückspindel (20) entlang der X-Achse erfolgt.
